# FASCICULE DE BREVET EUROPEEN

(11) **EP 2 059 616 B1**
(45) Date de publication et mention de la délivrance du brevet: **09.09.2015**
(21) Numéro de dépôt: 07823495.2
(22) Date de dépôt: 11.09.2007
(51) Int. Cl.: C21D 9/00, F27D 17/00, F27B 3/26, F27B 9/30

(54) **PROCEDE DE RECHAUFFAGE DANS UN FOUR UTILISANT UN COMBUSTIBLE DE FAIBLE PUISSANCE CALORIFIQUE, ET FOUR METTANT EN OEUVRE CE PROCEDE**
VERFAHREN ZUM WIEDERERHITZEN IN EINEM OFEN UNTER VERWENDUNG EINES BRENNSTOFFS MIT GERINGER HEIZKRAFT UND OFEN, BEI DEM DIESES VERFAHREN VERWENDET WIRD
METHOD OF REHEATING IN A FURNACE USING A FUEL OF LOW CALORIFIC POWER, AND FURNACE USING THIS METHOD

(30) Priorité: 13.09.2006 FR 0607999
(43) Date de publication de la demande: 20.05.2009
(73) Titulaire: FIVES STEIN, 94700 Maisons-Alfort (FR)
(72) Inventeur: CHEVER, René-Vincent, F-77177 Brou Sur Chantereine (FR); GIRAUD, Patrick, F-75013 Paris (FR)
(74) Mandataire: Cabinet Armengaud Aîné
(86) Numéro de dépôt international: PCT/FR2007/001461
(87) Numéro de publication internationale: WO 2008/031937

(56) Documents cités:
- EP-A- 0 322 678
- EP-A1- 1 275 740
- GB-A- 191 218 148

## Description

L'invention est relative à un procédé de contrôle d'un four de réchauffage, en particulier un four de réchauffage de produits sidérurgiques, notamment de brames, de blooms, d'ébauches ou de billettes, permettant de porter le produit à réchauffer à la température souhaitée pour le laminage avec un combustible à faible puissance calorifique, communément appelé « gaz pauvre ».

Par « gaz pauvre » on désigne un combustible gazeux dont la puissance calorifique est comprise entre 2700 kJ / Nm³ et 4000 kJ / Nm³.

Ces gaz pauvres sont généralement composés d'une grande proportion de gaz inertes, tels que l'azote et le gaz carbonique, qui jouent un rôle de ballast et qui doivent être réchauffés dans la combustion et en conséquence limitent la température théorique de combustion.

EP 0 322 678 concerne un système de brûleurs régénératifs, pour un four, pouvant être alimentés en gaz de haut fourneau. Deux matrices régénératives sont prévues pour chaque brûleur, ce qui complique le four et son procédé de contrôle. L'invention a pour but, notamment, de remédier à cet inconvénient.

A titre d'exemple, on décrit ci-après plus en détail le cas de fonctionnement avec un combustible gazeux à faible pouvoir calorique en prenant comme exemple le gaz de haut fourneau.

Le gaz de haut fourneau provient d'un haut fourneau où il est généré comme co-produit lors du processus d'élaboration de la fonte. Son principal avantage réside dans le fait qu'il est disponible « gratuitement », d'où l'intérêt de l'utiliser comme combustible pour alimenter les fours situés sur le site sidérurgiste. Il a par contre un faible pouvoir calorifique, de l'ordre de 3500 kJ/Nm³, lié à sa composition chimique qui comprend une teneur élevée en gaz inertes, N₂ et CO₂. Pour que les produits à réchauffer atteignent la température requise au défournement du four pour le laminage, environ 1150 à 1280°C, il est indispensable que les parois du four et les fumées de combustion soient à haute température, environ 1300 à 1400°C. Selon l'état de la technique, ces températures sont difficiles à atteindre par la température théorique de combustion lors de l'utilisation exclusive de gaz pauvres. La température théorique de combustion est la température maximale susceptible d'être obtenue par les gaz en fin de combustion. Elle se calcule en déterminant l'état final d'un mélange combustible/comburant pris initialement dans des proportions stoechiométriques ou dans des proportions définies et ayant subi une combustion adiabatique instantanée à pression constante et sans échange de chaleur avec son environnement. La température théorique de combustion ne peut pas être obtenue dans un four car, d'une part, la combustion ne se produit jamais instantanément et que, d'autre part, la flamme échange toujours de la chaleur avec son environnement. Il en résulte que dans des conditions données, on ne peut obtenir effectivement qu'une température de flamme pratique inférieure à la température théorique. Le rapport entre cette température pratique et la température théorique est appelé « rendement pyrométrique ». Cette notion est par exemple détaillée dans l'article « Combustibles pauvres dans les fours continus de sidérurgie » paru dans le numéro 232 d'avril 1981 de la Revue Générale de Thermique. Le rendement pyrométrique pour le gaz de haut fourneau est par exemple de 0.80. Cette valeur est retenue pour exposer le problème technique auquel l'invention apporte une solution.

Les fumées présentes dans le four ont donc une température maximale correspondant à la température de flamme pratique.

Il est connu qu'un moyen d'augmenter la température théorique de combustion consiste à préchauffer l'air de combustion ou le combustible en amont du nez du brûleur.

Les moyens mis en oeuvre selon l'état de la technique consistent à préchauffer l'un des deux fluides participant à la combustion soit au travers d'un récupérateur situé dans le circuit de fumées soit au travers des matrices régénératives de brûleurs régénératifs.

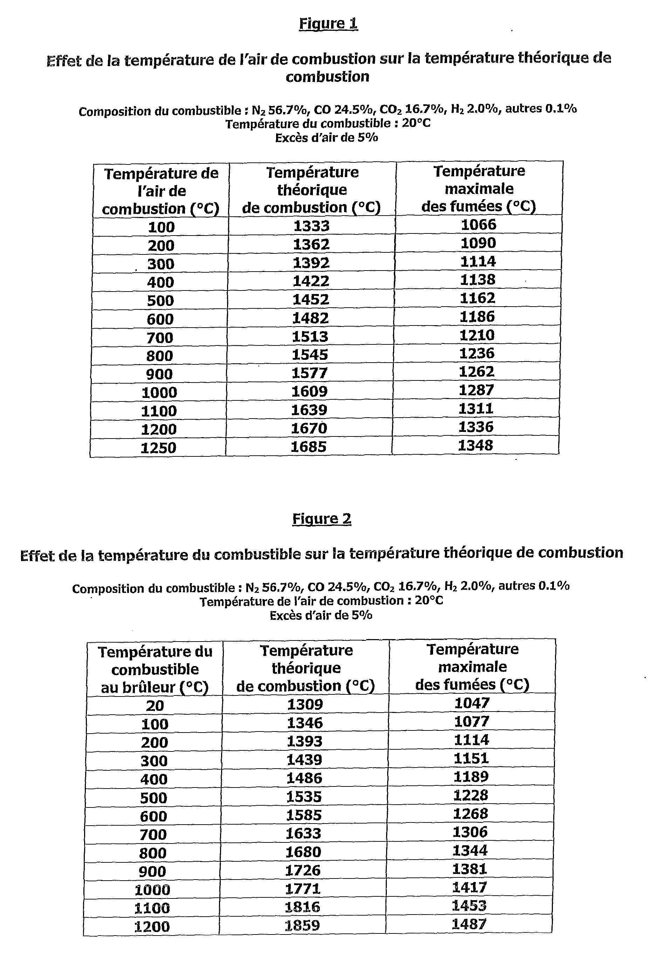

Les Fig. 1 à 4 des dessins annexés sont des tableaux de valeurs calculées pour un combustible de type gaz pauvre de haut fourneau, dont la composition en volume est la suivante : N₂ 56.7%, CO 24.5% , CO₂ 16.7%, H₂ 2.0%, autres 0.1 %. Les conditions sont rappelées en tête de chaque tableau.

Les calculs représentés en Figure 1 montrent qu'en préchauffant l'air de combustion, une température d'air de 1250°C n'est pas suffisante pour obtenir une température de fumées comparable à celles obtenues pour des gaz riches, c'est à dire 1400°C et plus. Ce niveau de température de réchauffage de l'air, et donc a fortiori un niveau supérieur, ne peut pas être obtenu avec un récupérateur industriel situé dans le circuit de fumées.

Les brûleurs régénératifs, grâce auxquels il est possible de réchauffer l'air à haute température, permettent d'obtenir des différences de températures entre les fumées et le gaz préchauffé d'environ 150°C. Néanmoins, la température limite de réchauffage de l'air avec un brûleur régénératif se situe entre 1150°C et 1200°C.

Il n'est donc pas possible d'obtenir une température de paroi de four suffisante pour réchauffer un produit à 1200°C en préchauffant uniquement l'air de combustion.

Les calculs représentés en Figure 2 montrent qu'en préchauffant le gaz pauvre, il est nécessaire de le préchauffer jusqu'à une température de 1000°C pour obtenir une température de fumées comparable à celles obtenues (1400°C et plus) pour des gaz riches. Ce niveau de température pourrait être atteint en effectuant le préchauffage dans un brûleur régénératif. Cette solution n'est néanmoins pas mise en oeuvre industriellement en raison de problèmes techniques qui la rendent difficile de mise en oeuvre, tels que les risques inhérents à ce niveau de température du gaz ainsi qu'aux problèmes induits par le cracking du gaz à ces températures. Il n'est donc pas possible industriellement d'obtenir une température de paroi de four suffisante pour réchauffer un produit à 1200°C en préchauffant uniquement le gaz pauvre.

Un autre moyen permettant d'augmenter la température théorique de combustion consiste à réaliser une suroxydation de l'air de combustion, c'est à dire à augmenter sa teneur en oxygène.

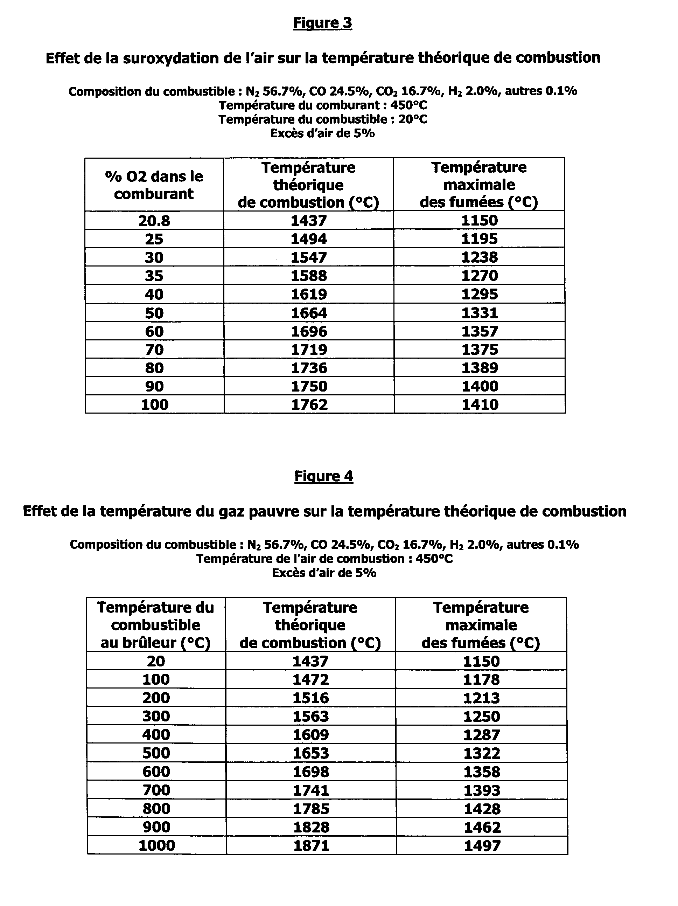

Les calculs représentés en Figure 3, avec un comburant à 450°C, montrent que cette solution n'est pas satisfaisante car même en préchauffant le comburant à 450°C, une teneur en oxygène dans le comburant de 80% est nécessaire pour atteindre une température de fumées proche de 1400°C. Un préchauffage à cette température d'oxygène presque pur n'est pas réalisable industriellement pour des raisons de sécurité. Par ailleurs, la rentabilité de cette solution serait très variable selon les usines et le coût du m³ d'oxygène. Pour ces mêmes raisons, une teneur moindre en oxygène associée à un réchauffage du gaz pauvre n'est pas une solution satisfaisante.

Ainsi, les solutions mises en oeuvre selon l'état de la technique ne permettent pas de porter le produit à réchauffer à la température souhaitée pour le laminage avec exclusivement un combustible à faible puissance calorifique dans des conditions satisfaisantes.

Pour répondre aux problèmes techniques énoncés, l'invention réside principalement dans un procédé de contrôle d'un four de réchauffage de produits sidérurgiques, notamment de brames, de blooms, d'ébauches ou de billettes, permettant de porter le produit à réchauffer à la température souhaitée pour le laminage,
- le four étant équipé majoritairement de brûleurs de type brûleurs régénératifs comportant des matrices régénératives et fonctionnant en mode tout ou rien,
- les brûleurs fonctionnant en modulation de durée,
- une partie des fumées de combustion traversant les matrices régénératives des brûleurs régénératifs afin de préchauffer l'un (combustible ou comburant) des fluides participant à la combustion, caractérisé en ce que :
- le four est équipé d'un récupérateur de chaleur placé à l'extérieur du four dans un carneau de fumées, et
- le solde des fumées de combustion traverse le récupérateur de chaleur pour préchauffer le fluide (comburant ou combustible) autre que celui préchauffé dans les matrices régénératives.

Avantageusement, un gaz pauvre est utilisé exclusivement comme combustible, et un préchauffage à haute température d'un des fluides participant à la combustion, obtenu lors de son passage au travers des matrices régénératives des brûleurs, est combiné avec un préchauffage de l'autre fluide participant à la combustion obtenu lors de son passage au travers du récupérateur de chaleur, et permet d'atteindre la température requise aux produits à réchauffer à la sortie du four.

Le débit des fumées qui traverse la matrice régénérative d'un brûleur régénératif est déterminé pour obtenir la température souhaitée des fumées en sortie du brûleur régénératif et corrélativement la température souhaitée sur le fluide à préchauffer après son passage dans la matrice régénérative.

De préférence, pour un temps de cycle constant de basculement entre deux brûleurs régénératifs d'une même paire, le temps de fonctionnement en mode chauffe de chaque brûleur régénératif est ajusté pour chaque cycle de sorte que le brûleur transmette la puissance calorifique requise.

Afin d'atteindre une température de flamme suffisante lors des phases d'allumage du four ou en fonctionnement à petit régime, la température du fluide provenant du récupérateur est avantageusement maintenue à un niveau minimum soit en utilisant le ou les brûleurs du four situés au plus près de ce récupérateur soit en utilisant un ou plusieurs brûleurs d'appoint. De préférence, les brûleurs d'appoint sont placés sur le circuit de fumées en amont du récupérateur.

La proportion de fumées passant par le récupérateur de chaleur est mise à profit pour un contrôle précis de la pression à l'intérieur du four afin de limiter les entrées d'air.

Avantageusement, le gaz pauvre est préchauffé dans les matrices régénératives des brûleurs à une température comprise entre 600°C et 800°C,
- le gaz pauvre a un pouvoir calorifique compris entre 2700 kJ / Nm³ et 4000 kJ / Nm³,
- et le comburant est formé par de l'air préchauffé dans le récupérateur de chaleur à une température comprise 400°C et 600°C pour obtenir une température de fumées supérieure à 1300°C permettant de porter le produit à réchauffer à une température comprise entre 1150°C et 1280°C.

De préférence, les brûleurs de type brûleurs régénératifs sont disposés sur des côtés opposés du four et sont groupés par paires de brûleurs en vis à vis, le brûleur d'une paire situé d'un côté étant commandé pour fonctionner alternativement en brûleur et cheminée alors que le brûleur de la paire situé de l'autre côté est commandé pour fonctionner alternativement en cheminée et brûleur. Le nombre de brûleurs de type brûleurs régénératifs est supérieur au nombre total de brûleurs d'un autre type.

Le temps de cycle constant de basculement entre deux brûleurs régénératifs d'une même paire est avantageusement compris entre 40 et 80 secondes et le temps de fonctionnement en mode chauffe de chaque brûleur régénératif est ajusté pour chaque cycle de sorte que le brûleur transmette la puissance calorifique requise.

L'invention est également relative à un four de réchauffage de produits sidérurgiques, notamment de brames, de blooms, d'ébauches ou de billettes, permettant de porter le produit à réchauffer à la température souhaitée pour le laminage, comportant
- d'une part majoritairement des brûleurs de type brûleurs régénératifs comportant des matrices régénératives et fonctionnant en mode tout ou rien,
- des moyens pour faire fonctionner les brûleurs en modulation de durée,
- des moyens pour qu'une partie des fumées de combustion traverse les matrices régénératives des brûleurs régénératifs afin de préchauffer l'un ou l'autre des fluides participant à la combustion (combustible ou comburant), caractérisé en ce qu'il comporte un récupérateur de chaleur, placé à l'extérieur du four dans un carneau de fumées,
- et des moyens pour que le solde des fumées de combustion traverse le récupérateur de chaleur pour préchauffer le fluide qui n'est pas réchauffé dans les matrices régénératives (comburant ou combustible).

L'invention consiste, mises à part les dispositions exposées ci-dessus, en un certain nombre d'autres dispositions dont il sera plus explicitement question ci-après à propos d'exemples de réalisation décrits en détail avec références aux dessins annexés, mais qui ne sont nullement limitatifs. Sur ces dessins :
Fig. 1 à 3 sont des tableaux de valeurs calculées pour un combustible de type gaz pauvre de haut fourneau, dont la composition en volume est la suivante: N₂ 56.7%, CO 24.5%, CO₂ 16.7%, H₂ 2.0%, autres 0.1%, avec fonctionnement selon procédés de l'état de la technique
Fig.4 est un tableau de valeurs calculées pour un combustible de type gaz pauvre de haut fourneau semblable à celui des Fig.1 à 3, avec fonctionnement selon le procédé de l'invention.
Fig. 5 est une vue schématique en plan d'un four de réchauffage selon l'invention, et
Fig.6 est une coupe transversale verticale du four de Fig.5 au niveau de deux brûleurs régénératifs en vis-à-vis.

A titre d'exemple de réalisation de l'invention, le tableau de la Figure 4 montre qu'un préchauffage du gaz pauvre dans la matrice régénérative à une température modérée de 700°C combiné à un réchauffage de l'air de combustion à 450°C dans le récupérateur de chaleur permet d'atteindre la température de flamme requise pour réchauffer les produits.

Une caractéristique du procédé selon l'invention est que les fumées sont réparties en deux circuits séparés permettant de préchauffer, selon le circuit, le combustible et le comburant et que l'un au moins de ces circuits de fumées traverse un récupérateur épuisant les fumées en sortie de four.

Une autre caractéristique du procédé selon l'invention est que la combinaison d'un préchauffage de l'un des fluides participant à la combustion obtenu lors de son passage au travers des matrices régénératives des brûleurs, et d'un préchauffage de l'autre fluide participant à la combustion obtenu lors de son passage au travers du récupérateur de chaleur, permet, grâce à une température de flamme élevée, d'atteindre la température requise aux produits à réchauffer à la sortie du four en utilisant exclusivement un gaz pauvre.

Une autre caractéristique du procédé selon l'invention est que le débit des fumées qui traverse la matrice régénérative d'un brûleur régénératif est déterminé pour obtenir la température souhaitée des fumées en sortie du brûleur régénératif et corrélativement la température souhaitée sur le fluide à préchauffer après son passage dans la matrice régénérative.

En effet, pour atteindre la température de flamme visée avec un gaz pauvre, selon l'invention on préchauffe le comburant et le combustible. Pour que le fluide à préchauffer atteigne la température requise à la sortie de la matrice régénérative il faut que celle-ci puisse lui transmettre l'énergie calorique correspondante. Cela est possible si la matrice régénérative a atteint une température suffisante lors du précédent fonctionnement du brûleur en mode cheminée. En effet, pour une masse donnée de matrice régénérative, à cette température correspond une quantité d'énergie emmagasinée dans la matrice susceptible d'être restituée au fluide à préchauffer lors de son passage au travers de la matrice lors du prochain fonctionnement du brûleur en mode chauffe.

Selon cette caractéristique de l'invention, le débit de fumées circulant dans la matrice régénérative lors d'un fonctionnement en mode cheminée est limité à celui nécessaire pour atteindre la température visée sur la matrice régénérative. Le débit de fumées en excès est évacué à l'extérieur du four en passant au travers du récupérateur de chaleur tubulaire préchauffant l'autre fluide participant à la combustion contribuant ainsi à un bon rendement thermique global du four.

Une autre caractéristique du procédé selon l'invention est que, pour un temps de cycle constant de basculement entre deux brûleurs régénératifs d'une même paire, le temps de fonctionnement en mode chauffe de chaque brûleur régénératif est ajusté pour chaque cycle de sorte que le brûleur transmette la puissance calorifique requise.

Le temps de cycle de fonctionnement d'un brûleur comprend le temps de fonctionnement en mode chauffe auquel s'ajoute le temps de fonctionnement en mode cheminée. Pour un temps de cycle constant, une réduction du temps de fonctionnement en mode chauffe en raison d'une demande calorifique plus faible se traduit par une augmentation de la même durée de fonctionnement en mode cheminée. Du fait de cette durée plus importante de fonctionnement du brûleur en mode cheminée, le débit de fumées circulant dans la matrice régénérative est réduit de sorte de limiter la quantité d'énergie emmagasinée dans la matrice à celle nécessaire au fluide à préchauffer lors du prochain fonctionnement du brûleur en mode chauffe. A nouveau, le débit de fumées en excès est évacué à l'extérieur du four en passant au travers du récupérateur de chaleur tubulaire préchauffant l'autre fluide participant à la combustion contribuant ainsi à un bon rendement thermique global du four.

Selon un exemple de réalisation de l'invention, le temps de cycle constant d'un brûleur est de 60s (60 secondes) avec un temps de base de fonctionnement en mode chauffe de 30s et un temps de fonctionnement en mode cheminée de 30s. Lorsque la puissance calorifique requise au brûleur est de 100% de sa puissance nominale, le brûleur fonctionne 30s en mode chauffe puis 30s en mode cheminée. Lorsque la puissance calorifique requise au brûleur est de 50% de sa puissance nominale, le brûleur fonctionne 15s en mode chauffe puis 45s en mode cheminée. La mise en service du brûleur en mode chauffe nécessitant un certain temps, il existe une durée minimale de fonctionnement en mode chauffe, par exemple de 5s . Selon la demande calorique, le temps de fonctionnement en mode chauffe sera ainsi compris entre 5 et 30s , chaque seconde de moins sur la durée de chaude ajoutant une seconde sur la durée de fonctionnement en mode cheminée pour un temps de cycle constant de 60s.

Une autre caractéristique du procédé selon l'invention est que la proportion de fumées passant par le récupérateur de chaleur tubulaire est mise à profit pour un contrôle précis de la pression à l'intérieur du four afin de limiter les entrées d'air. Selon l'invention, le débit de fumées évacué par les brûleurs au travers des matrices régénératives est limité. Il en résulte une quantité importante de fumées présente dans le four mise à profit pour contrôler le niveau de pression du four en agissant sur le débit d'extraction des fumées au travers d'un registre ou d'un exhausteur dont le moteur électrique est contrôlé via un variateur de fréquence du courant d'alimentation.

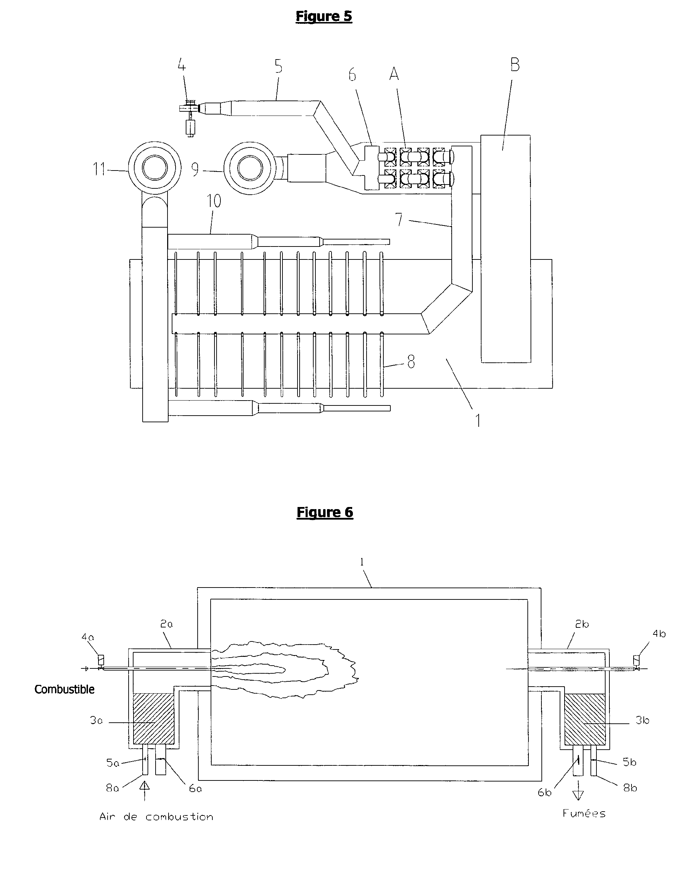

La Figure 5, représente un exemple de réalisation de l'invention montrant l'implantation d'un récupérateur de chaleur A, par exemple tubulaire, placé à l'extérieur du four 1 dans le carneau de fumées B. Le préchauffage de l'air de combustion et/ou du combustible est ainsi réalisé hors des brûleurs 2a, 2b (Fig.6) de type régénératif, en amont de ceux-ci. Le préchauffage dans le récupérateur de chaleur est effectué pour l'ensemble des brûleurs concernés. Ce préchauffage a lieu en continu par échange entre fluide chaud et fluide froid. Dans les brûleurs régénératifs 2a, 2b, le transfert d'énergie entre les fumées et le fluide à préchauffer est réalisé directement à l'intérieur du brûleur, ou à proximité immédiate, dans une matrice régénérative 3a, 3b, formée par une masse compacte de matériaux accumulateurs de chaleur.

Dans l'exemple de réalisation représenté, c'est l'air de combustion qui est préchauffé. Celui-ci est acheminé à partir du ventilateur 4 par la gaine d'alimentation 5 jusqu'à une nourrice d'alimentation 6 qui distribue l'air sur quatre circuits parallèles équipés chacun de deux échangeurs successifs de deux passes. L'air préchauffé est repris en sortie du récupérateur par un collecteur 7 pour être distribué aux brûleurs 2a, 2b par les tuyauteries d'alimentation 8. Sur le circuit fumées, le carneau B permet d'amener les fumées extraite du four 1 au récupérateur A où elles se refroidissent en cédant des calories à l'air de combustion avant d'être évacuées par la cheminée 9.

Le principe de fonctionnement des brûleurs régénératifs est maintenant décrit plus en détail.

Comme représenté sur la Figure 6, les brûleurs régénératifs 2a, 2b sont montés par paires sur le four 1. Les brûleurs sont installés sur les parois longitudinales opposées du four, en vis-à-vis par paires. A tour de rôle, un des brûleurs d'une paire sert de cheminée pendant que l'autre chauffe.

Chaque brûleur contient un organe 4a, 4b, notamment formé par une électrovanne, qui commande l'admission du combustible, un organe 5a, 5b notamment formé par un volet d'étranglement, qui commande l'admission de l'air de combustion par une tuyauterie 8, et un organe 6a, 6b, notamment formé par un volet d'étranglement, qui permet l'évacuation des gaz de combustion. Il est à noter qu'un même organe, par exemple une vanne trois voies, peut assurer les deux fonctions des organes 5 et 6.

Comme représenté en Figure 6, lorsque le brûleur 2b fait office de cheminée, l'organe d'échappement 6b est ouvert et l'organe d'admission de l'air 5b est fermé. Les gaz de combustion passent à travers la matrice régénérative 3b puis sont mis à l'air libre, avantageusement par un circuit indépendant comme représenté en Figure 5, au travers du circuit 10 jusqu'à la cheminée 11.

Lorsque le brûleur 2b chauffe, la position de chaque organe est inversée et cette fois c'est l'air de combustion qui passe à travers la matrice régénérative avant d'être mélangé au combustible pour être brûlé.

Chaque brûleur fonctionne donc en alternance en mode chauffe, avec un temps de cycle composé d'une phase de chauffe et d'une phase de cheminée d'une durée comprise généralement entre 30 et 120 secondes. Cette durée est fonction du volume de la matrice régénérative et de la capacité calorifique qu'elle est capable d'accumuler et d'autres paramètres qui ne sont pas décrits ici.

Dans l'exemple représenté sur la Figure 6, c'est l'air de combustion qui est préchauffé en passant au travers de la matrice régénérative. Selon un autre exemple de réalisation, c'est le combustible qui est préchauffé en passant au travers de la matrice régénérative.

La puissance délivrée par le brûleur en chauffe est ajustée en fonction du besoin calorifique dans le four. Un premier mode d'ajustement consiste à moduler la puissance du brûleur en faisant varier le débit de combustible pendant son temps de fonctionnement en mode chauffe. Avantageusement, le mode d'ajustement selon l'invention consiste à maintenir constant le débit de combustible et à moduler le temps de fonctionnement du brûleur en mode chauffe.

## Revendications

1. Procédé de contrôle d'un four de réchauffage de produits sidérurgiques, notamment de brames, de blooms, d'ébauches ou de billettes, permettant de porter le produit à réchauffer à la température souhaitée pour le laminage,
- le four étant équipé majoritairement de brûleurs de type brûleurs régénératifs (2a, 2b) comportant des matrices régénératives (3a,3b) et fonctionnant en mode tout ou rien,
- les brûleurs fonctionnant en modulation de durée,
- une partie des fumées de combustion traversant les matrices régénératives des brûleurs régénératifs afin de préchauffer l'un (combustible ou comburant) des fluides participant à la combustion, **caractérisé en ce que** :
- le four est équipé d'un récupérateur de chaleur (A) placé à l'extérieur du four dans un carneau de fumées (B), et
- le solde des fumées de combustion traverse le récupérateur de chaleur (A) pour préchauffer le fluide (comburant ou combustible) autre que celui préchauffé dans les matrices régénératives.

2. Procédé selon la revendication 1, **caractérisé en ce que** :
- un gaz pauvre est utilisé exclusivement comme combustible ;
- un préchauffage à haute température d'un des fluides participant à la combustion, obtenu lors de son passage au travers des matrices régénératives (3a,3b) des brûleurs, est combiné avec un préchauffage de l'autre fluide participant à la combustion obtenu lors de son passage au travers du récupérateur de chaleur (A), et permet d'atteindre la température requise aux produits à réchauffer à la sortie du four.

3. Procédé selon la revendication 1 ou 2, **caractérisé en ce que** le débit des fumées qui traverse la matrice régénérative d'un brûleur régénératif est déterminé pour obtenir la température souhaitée des fumées en sortie du brûleur régénératif et corrélativement la température souhaitée sur le fluide à préchauffer après son passage dans la matrice régénérative.

4. Procédé selon l'une quelconque des revendications 1 à 3, **caractérisé en ce que** pour un temps de cycle constant de basculement entre deux brûleurs régénératifs d'une même paire, le temps de fonctionnement en mode chauffe de chaque brûleur régénératif est ajusté pour chaque cycle de sorte que le brûleur transmette la puissance calorifique requise.

5. Procédé selon l'une quelconque des revendications 1 à 4, **caractérisé en ce que**, afin d'atteindre une température de flamme suffisante lors des phases d'allumage du four ou en fonctionnement à petit régime, la température du fluide provenant du récupérateur (A) est maintenue à un niveau minimum soit en utilisant le ou les brûleurs du four situés au plus près de ce récupérateur soit en utilisant un ou plusieurs brûleurs d'appoint.

6. Procédé selon la revendication 5, **caractérisé en ce que** les brûleurs d'appoint sont placés sur le circuit de fumées en amont du récupérateur (A).

7. Procédé selon l'une quelconque des revendications 1 à 6, **caractérisé en ce que** la proportion de fumées passant par le récupérateur de chaleur (A) est mise à profit pour un contrôle précis de la pression à l'intérieur du four afin de limiter les entrées d'air.

8. Procédé selon la revendication 2, ou l'ensemble de la revendication 2 et de l'une quelconque des revendications 3 à 7, **caractérisé en ce que** :
- le gaz pauvre est préchauffé dans les matrices régénératives des brûleurs à une température comprise entre 600°C et 800°C,
- le gaz pauvre a un pouvoir calorifique compris entre 2700 kJ / Nm³ et 4000 kJ /Nm³,
- et le comburant est formé par de l'air préchauffé dans le récupérateur de chaleur (A) à une température comprise 400°C et 600°C pour obtenir une température de fumées supérieure à 1300°C permettant de porter le produit à réchauffer à une température comprise entre 1150°C et 1280°C.

9. Procédé selon l'une quelconque des revendications précédentes, **caractérisé en ce que** le nombre de brûleurs de type brûleurs régénératifs (2a, 2b) est supérieur au nombre total de brûleurs d'un autre type.

10. Procédé selon l'une quelconque des revendications précédentes, **caractérisé en ce que** le temps de cycle constant de basculement entre deux brûleurs régénératifs d'une même paire est compris entre 40 et 80 secondes et le temps de fonctionnement en mode chauffe de chaque brûleur régénératif est ajusté pour chaque cycle de sorte que le brûleur transmette la puissance calorifique requise.

11. Four de réchauffage de produits sidérurgiques, notamment de brames, de blooms, d'ébauches ou de billettes, permettant de porter le produit à réchauffer à la température souhaitée pour le laminage, comportant :
- d'une part majoritairement des brûleurs de type brûleurs régénératifs (2a, 2b) comportant des matrices régénératives (3a, 3b) et fonctionnant en mode tout ou rien,
- des moyens (4a,5a ; 4b,5b) pour faire fonctionner les brûleurs (2a, 2b) en modulation de durée ;
- des moyens (6a, 6b) pour qu'une partie des fumées de combustion traverse les matrices régénératives (3a, 3b) des brûleurs régénératifs afin de préchauffer l'un ou l'autre des fluides participant à la combustion (combustible ou comburant),
**caractérisé en ce qu'**il comporte un récupérateur de chaleur (A) placé à l'extérieur du four dans un carneau de fumées (B) et des moyens pour que le solde des fumées de combustion traverse le récupérateur de chaleur (A) pour préchauffer le fluide qui n'est pas réchauffé dans les matrices régénératives (comburant ou combustible).

12. Four selon la revendication 11, **caractérisé en ce que** le nombre de brûleurs de type brûleurs régénératifs (2a, 2b) est supérieur à celui des autres brûleurs.

## Patentansprüche

1. Verfahren zum Steuern eines Ofens zum Aufheizen von Eisenhüttenprodukten, insbesondere von Brammen, Rohblöcken, Vorblöcken oder Knüppeln, der ermöglicht, das aufzuheizende Produkt auf die für das Walzen gewünschte Temperatur zu bringen,
- wobei der Ofen mehrheitlich mit Brennern vom Typ Regenerationsbrenner (2a, 2b) versehen ist, die Regenerationsmatrizen (3a, 3b) aufweisen und im Binärmodus betrieben werden,
- wobei die Brenner in Dauermodulation betrieben werden,
- wobei ein Teil der Verbrennungsrauchgase die Regenerationsmatrizen der Regenerationsbrenner durchquert, um das eine der (die Verbrennung bewirkenden oder fördernden) Fluide, die an der Verbrennung beteiligt sind, vorzuheizen, **dadurch gekennzeichnet, dass**
- der Ofen mit einem Wärmeaustauscher (A) versehen ist, der außerhalb des Ofens in einem Rauchgasabzug (B) platziert ist, und
- der Rest der Verbrennungsrauchgase den Wärmeaustauscher (A) durchquert, um das andere (die Verbrennung bewirkende oder fördernde) Fluid, das nicht in den Regenerationsmatrizen vorgeheizt wurde, vorzuheizen.

2. Verfahren nach Anspruch 1, **dadurch gekennzeichnet, dass**,
- ein Schwachgas ausschließlich als Brennstoff verwendet wird;
- ein Vorheizen eines der an der Verbrennung beteiligten Fluide, das bei seinem Durchströmen der Regenerationsmatrizen (3a, 3b) der Brenner erhalten wurde, auf hohe Temperatur mit einem Vorheizen des anderen an der Verbrennung beteiligten Fluids, das bei seinem Durchströmen des Wärmetauschers (A) erhalten wurde, kombiniert wird und das Erreichen der Temperatur, die für die aufzuheizenden Produkte benötigt wird, am Ausgang des Ofens ermöglicht.

3. Verfahren nach Anspruch 1 oder 2, **dadurch gekennzeichnet dass** die Menge der Rauchgase, welche die Regenerationsmatrize eines Regenerationsbrenners durchquert, bestimmt wird, um die gewünschte Temperatur der Rauchgase am Ausgang des Regenerationsbrenners und dementsprechend die in dem vorzuheizenden Fluid nach seinem Durchströmen der Regenerationsmatrize gewünschte Temperatur zu erreichen.

4. Verfahren nach einem der Ansprüche 1 bis 3, **dadurch gekennzeichnet, dass** bei einer konstanten Zykluszeit zum Umschalten zwischen zwei Regenerationsbrennern eines gleichen Paares die Betriebszeit jedes Regenerationsbrenners im Heizmodus für jeden Zyklus so angepasst wird, dass der Brenner die benötige Wärmeleistung überträgt.

5. Verfahren nach einem der Ansprüche 1 bis 4, **dadurch gekennzeichnet, dass** zum Erreichen einer Flammentemperatur, die bei den Phasen des Anzündens des Ofens oder im Schwachbetrieb ausreichend ist, die Temperatur des vom Wärmetauscher (A) kommenden Fluids auf einem Mindestniveau gehalten wird, indem entweder der oder die Brenner des Ofens verwendet werden, die diesem Wärmetauscher am nächsten sind, oder indem ein oder mehrere Zusatzbrenner verwendet werden.

6. Verfahren nach Anspruch 5, **dadurch gekennzeichnet, dass** die Zusatzbrenner in dem Rauchgaskreislauf stromaufwärts des Wärmetauschers (A) platziert sind.

7. Verfahren nach einem der Ansprüche 1 bis 6, **dadurch gekennzeichnet, dass** der Rauchgasanteil, der den Wärmetauscher (A) durchströmt, für eine präzise Steuerung des Drucks im Inneren des Ofens genutzt wird, um den Eintritt von Luft zu begrenzen.

8. Verfahren nach Anspruch 2 oder nach Anspruch 2 und einem der Ansprüche 3 bis 7 zusammen, **dadurch gekennzeichnet, dass**
- das Schwachgas in den Regenerationsmatrizen der Brenner auf eine Temperatur zwischen 600 °C und 800 °C vorgeheizt wird,
- das Schwachgas einen Brennwert zwischen 2.700 kJ/Nm³ und 4.000 kJ/Nm³ hat,
- und der Brennstoff von Luft gebildet ist, die in dem Wärmetauscher (A) auf eine Temperatur zwischen 400 °C und 600 °C vorgeheizt wird, um eine Rauchgastemperatur über 1.300 °C zu erhalten, die ermöglicht, das aufzuheizende Produkt auf eine Temperatur zwischen 1.150 °C und 1.280 °C zu bringen.

9. Verfahren nach einem der vorhergehenden Ansprüche, **dadurch gekennzeichnet, dass** die Anzahl der Brenner vorn Typ Regenerationsbrenner (2a, 2b) größer als die Gesamtzahl der Brenner eines anderen Typs ist.

10. Verfahren nach einem der vorhergehenden Ansprüche, **dadurch gekennzeichnet, dass** die konstante Zykluszeit zum Umschalten zwischen zwei Regenerationabrennern eines gleichen Paares zwischen 40 und 80 Sekunden beträgt und die Betriebszeit jedes Regenerationsbrenners im Heizmodus für jeden Zyklus so angepasst wird, dass der Brenner die benötige Wärmeleistung überträgt.

11. Ofen zum Aufheizen von Eisenhüttenprodukten, insbesondere von Brammen, Rohblöcken, Vorblöcken oder Knüppeln, der ermöglicht, das aufzuheizende Produkt auf die für das Walzen gewünschte Temperatur zu bringen, und Folgendes aufweist:
- einerseits mehrheitlich Brenner vom Typ Regenerationsbrenner (2a, 2b), die Regenerationsmatrizen (3a, 3b) aufweisen und im Binärmodus betrieben werden,
- Mittel (4a, 5a; 4b, 5b), um die Brenner (2a, 2b) in Dauermodulation zu betreiben;
- Mittel (6a, 6b), damit ein Teil der Verbrennungsrauchgase die Regenerationsmatrizen der Regenerationsbrenner durchquert, um das eine oder das andere der Fluide, die an der Verbrennung beteiligt sind, (die Verbrennung bewirkend oder fördernd) vorzuheizen,
**dadurch gekennzeichnet, dass** er einen Wärmetauscher (A) aufweist, der außerhalb des Ofens in einem Rauchgasabzug (B) platziert ist, und Mittel, damit der Rest der Verbrennungsrauchgase den Wärmeaustauscher (A) durchquert, um das Fluid, das nicht in den Regenerationsrnatrizen aufgeheizt wurde, (die Verbrennung bewirkend oder fördernd) vorzuheizen.

12. Ofen nach Anspruch 11, **dadurch gekennzeichnet, dass** die Anzahl der Brenner vom Typ Regenerationsbrenner (2a, 2b) größer als die der anderen Brenner ist.

## Claims

1. Method of controlling a reheat furnace for reheating iron and steel products, for example slabs, blooms, ingots or billets, making it possible for the product to be reheated to be brought to the desired temperature for rolling,
- the furnace being equipped mostly with regenerative-type burners (2a, 2b) which include regenerators (3a, 3b) and operate in on/off mode,
- the burners operating in time modulation mode,
- a portion of the combustion gases passing through the regenerators of the regenerative burners so as to preheat one of the fluids (either the fuel or the oxidizer) participating in the combustion, **characterized in that**:
- the furnace is equipped with a heat recuperator (A) placed outside the furnace in a flue (B), and
- the remainder of the combustion gases passes through the heat recuperator (A) in order to preheat the fluid (either the oxidizer or the fuel) other than that preheated in the regenerators.

2. Method according to Claim 1, **characterized in that**:
- a lean gas is used exclusively as fuel; and
- preheating to high temperature one of the fluids participating in the combustion, obtained as it flows through the regenerators (3a, 3b) of the burners, is combined with preheating of the other fluid participating in the combustion, obtained as it flows through the heat recuperator (A), and makes it possible for the products leaving the furnace to have been reheated to the required temperature.

3. Method according to Claim 1 or 2, **characterized in that** the flow rate of the flue gases passing through the regenerator of a regenerative burner is determined so as to obtain the desired temperature of the flue gases leaving the regenerative burner and cor-respondingly the desired temperature of the fluid to be preheated after it has passed through the regenerator.

4. Method according to any one of Claims 1 to 3, **characterized in that**, for a constant cycle time with switching between the two regenerative burners of any one pair of burners, the operating time of each regenerative burner in heater mode is adjusted for each cycle so that the burner transmits the required calorific value.

5. Method according to any one of Claims 1 to 4, **characterized in that**, to achieve a sufficient flame temperature during the ignition phases of the furnace or when not operating at full capacity, the temperature of the fluid coming from the recuperator (A) is maintained at a minimum level, either by using the furnace burner(s) located closest to this recuperator or by using one or more booster burners.

6. Method according to Claim 5, **characterized in that** the boosters burners are placed in the flue gas circuit upstream of the recuperator (A).

7. Method according to any one of Claims 1 to 6, **characterized in that** the proportion of flue gases passing through the heat recuperator (A) is advantageously used for precisely controlling the pressure inside the furnace, so as to limit the intake of air.

8. Method according to Claim 2, or a combination of Claim 2 and any one of Claims 3 to 7, **characterized in that**:
- the lean gas is preheated in the regenerators of the burners to a temperature between 600°C and 800°C;
- the lean gas has a calorific value of between 2700 kJ/Sm³ and 4000 kJ/Sm³; and
- the oxidizer is formed by air preheated in the heat recuperator (A) to a temperature between 400°C and 600°C in order to obtain a flue gas temperature above 1300°C, allowing the product to be reheated to reach a temperature between 1150°C and 1280°C.

9. Method according to any one of the preceding claims, **characterized in that** the number of regenerative-type burners (2a, 2b) is greater than the total number of burners of another type.

10. Method according to any one of the preceding claims, **characterized in that** the constant cycle time with switching between the two regenerative burners of any one pair of burners is between 40 and 80 seconds and the operating time of each regenerative burner in heater mode is adjusted for each cycle so that the burner transmits the required calorific value.

11. Reheat furnace for reheating iron and steel products, for example slabs, blooms, ingots or billets, making it possible for the product to be reheated to be brought to the desired temperature for rolling, which includes:
- on the one hand, mostly regenerative-type burners (2a, 2b) which include regenerators (3a, 3b) and operate in on/off mode,
- means (4a, 5a; 4b, 5b) for making the burners (2a, 2b) operate in time modulation mode;
- means (6a, 6b) so that a portion of the combustion gases passes through the regenerators (3a, 3b) of the regenerative burners so as to preheat one or other of the fluids participating in the combustion (either the fuel or the oxidizer),
**characterized in that** it comprises a heat recuperator (A) placed outside the furnace in a flue (B) and means so that the remainder of the combustion gases passes through the heat recuperator (A) for preheating the fluid (either the oxidizer or the fuel) that is not preheated in the regenerators.

12. Furnace according to Claim 11, **characterized in that** the number of regenerative-type burners (2a, 2b) is greater than that of the other burners.
